Europäisches Patentamt

European Patent Office

Office européen des brevets

(11) Veröffentlichungsnummer : **0 092 820**
**B1**

(12) **EUROPÄISCHE PATENTSCHRIFT**

(45) Veröffentlichungstag der Patentschrift :
**20.08.86**

(51) Int. Cl.⁴ : **H 02 H   9/04**

(21) Anmeldenummer : **83103968.0**

(22) Anmeldetag : **22.04.83**

(54) Schaltungsanordnung für den Überspannungsschutz von Schnittstellenschaltungen.

(30) Priorität : **26.04.82 DE 3215551**

(43) Veröffentlichungstag der Anmeldung :
**02.11.83 Patentblatt 83/44**

(45) Bekanntmachung des Hinweises auf die Patenterteilung : **20.08.86 Patentblatt 86/34**

(84) Benannte Vertragsstaaten :
**AT CH FR GB LI NL SE**

(56) Entgegenhaltungen :
**EP-A- 0 034 288**
**GB-A- 1 436 625**
**US-A- 2 552 780**
**US-A- 4 271 446**

(73) Patentinhaber : **Siemens Aktiengesellschaft Berlin
und München**
**Wittelsbacherplatz 2**
**D-8000 München 2 (DE)**

(72) Erfinder : **Rudolf, Hans-Werner, Dr. Dipl.-Phys.**
**Wörthstrasse 17**
**D-8000 München 80 (DE)**

**Beschreibung**

Die Erfindung betrifft eine Schaltungsanordnung für den Überspannungsschutz von unter Verwendung von Halbleiterbauelementen aufgebauten, gruppenweise an eine Versorgungsspannungsquelle angeschlossenen Schnittstellenschaltungen für den Anschluß von zweidrähtigen analogen Teilnehmeranschlußleitungen an Fernsprechvermittlungsstellen.

Schnittstellen dieser Art, die u. a. Empfangs- und Sendeverstärker, Einrichtungen zur Digital-Analogwandlung und Analog-Digitalwandlung, sowie Empfangs- und Sendefilter umfassen, sind Umwelteinflüssen ausgesetzt, die über die angeschlossenen Teilnehmeranschlußleitungen an sie gelangen, beispielsweise in Form von Blitzbeeinflussungen. Bekannte Maßnahmen des Überspannungsschutzes bei solchen Schnittstellenschaltungen bestehen im Einsatz von Diodenbrücken, deren Dioden durch die Versorgungsspannung normalerweise in Sperrichtung vorgespannt sind und bei Auftreten von Überspannungen umgepolt, und damit leitend werden. Durch Verwendung von Absperrelementen, über die die Versorgungsspannung an die eine Diagonale dieser Diodenbrücken gelegt ist und die so gepolt sind, daß sie beim Auftreten von Überspannungen in den Sperrzustand übergehen, wird vermieden, daß die durch die Überspannungen bedingten Aufladungen der Teilnehmeranschlußleitung auf die Versorgungsleitungen abfließen und damit Bauteile anderer Gruppen von Schnittstellenschaltungen bzw. weitere an die Versorgungsleitung angeschlossene Bauteile beeinflussen.

Die erwähnte Aufladung wird im bekannten Fall über Ableitelemente auf einen auf Bezugspotential liegenden Schaltungspunkt, beispielsweise Gestellmasse abgeleitet. Diese Schaltelemente sind im bekannten Falle Thyristor-Elemente, die aus Kosten- und Platzgründen nur gruppenindividuell vorgesehen sind, d. h. zwischen den gemeinsamen beiden Anschlußpunkten der jeweils einen Diagonalen der Brückenschaltungen und dem Bezugspotential führenden Schaltungspunkt eingefügt sind.

Wenn bei einer solchen Schaltungsanordnung bei Auftreten von Überspannungen auf einer bestimmten Teilnehmeranschlußleitung die Dioden der zugeordneten Brückenschaltung und auch die genannten Ableitelemente leitend werden, hat dies zur Folge, daß zwar die betreffende Schnittstellenschaltung wirksam geschützt ist, daß aber die betreffenden Diagonalen sämtlichen übrigen Brückenschaltungen der Gruppe ebenfalls auf Bezugspotential gelegt werden, so daß auch diese übrigen Schnittstellenschaltungen in ihrer Funktion gestört werden.

Aufgabe der vorliegenden Erfindung ist es daher, bei einer Schutzschaltung der obengenannten Art eine derartige Störung von nicht direkt betroffenen Schnittstellenschaltungen zu vermeiden.

Erfindungsgemäß wird diese Aufgabe dadurch gelöst, daß Ableitschaltelemente verwendet werden, die die bei Auftreten von Überspannungen an der mit ihnen verbundenen Brückendiagonalen entstehenden Spannungshübe abflachen und/oder begrenzen, d. h. die Hilfsspannungen stabilisieren.

Durch die genannte Stabilisierung der Potentiale mit der Folge, daß diese bis zum Ende der regelmäßig nur kurz andauernden Überspannungsbeanspruchung eine nur geringe Überhöhung erreicht haben, ist die Beeinflussung der nicht direkt von der Überspannung betroffenen übrigen Schnittstellenschaltungen einer Gruppe ausgeschlossen, so daß es nicht zu einem fehlerhaften Ansprechen der darin enthaltenen Schaltungsanordnungen kommen kann.

Gemäß weiterer Ausgestaltungen der Erfindung können die Ableitelemente den praktischen Bedürfnissen entsprechend in Form eines Kondensators, einer Zenerdiode oder eines Varistors, oder in Form der Parallelschaltung eines Kondensators und einer Zenerdiode oder eines Varistors, wie auch in Form einer geeigneten spannungsstabilisierenden Halbleiterschaltung realisiert sein.

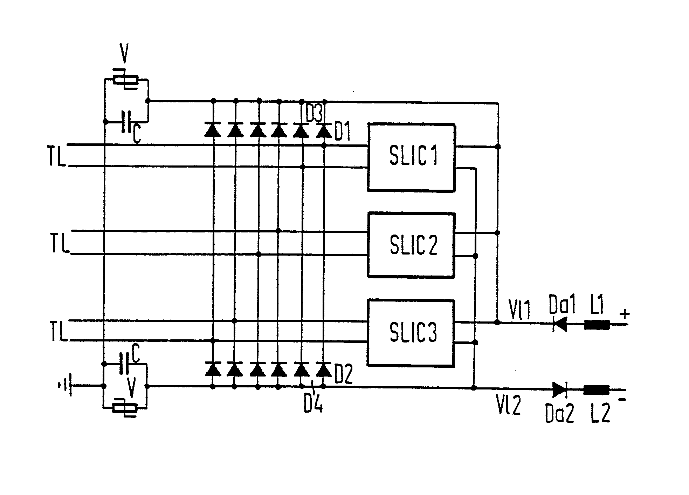

Bei dem in der Figur angenommenen Beispiel sind drei Schnittstellenschaltungen SLIC 1 bis SLIC 3 zu einer Gruppe zusammengefaßt, die jeweils dem Anschluß einer Teilnehmeranschlußleitung TL an eine hier nicht dargestellte Vermittlungsstelle dienen. Da die Teilnehmeranschlußleitungen Zweidrahtleitungen sind, auf denen Analogsignale übertragen werden, haben solche Schnittstellenschaltungen unter der Annahme des Vorliegens einer digitalen Vermittlungsstelle, in der die Durchschaltung vierdrähtig erfolgt, u. a. eine Einrichtung zur Analog-Digitalwandlung bzw. Digital-Analogwandlung mit zugeordneten Empfangs- bzw. Sendefiltern sowie eine Gabelschaltung für den Zweidraht-/Vierdrahtübergang aufzuweisen. Ferner sind Bestandteil dieser Schnittstellenschaltungen ein Empfangs- und ein Sendeverstärker, eine Schaltungsanordnung zur Schleifenindikation und ggf. Mittel zur Rufstromeinspeisung und zum Prüfen. Die meisten dieser Bestandteile sind unter Verwendung von Halbleiterbauelementen aufgebaut, die gegenüber Spannungen geschützt werden müssen, die über die Teilnehmeranschlußleitungen TL an sie gelangen können.

Jeder der Schnittstellenschaltungen ist eine aus vier Dioden bestehende Brückenschaltung zugeordnet. Die einen Diagonalen dieser Brückenschaltungen (bei der der Schnittstellenschaltung SLIC 1 zugeordneten Brückenschaltung sind dies die Verbindungspunkte der Dioden D1 und D3 bzw. der Dioden D2 und D4) sind an die allen drei Schnittstellenschaltungen gemeinsamen Versorgungsleitung VI1 und VI2 angeschlossen, über die auch die Versorgungsspannung von einer nicht dargestellten zentralen Speisespannungsquelle an die Schnittstellenschaltungen selbst gelangt. Die Dioden sind durch diese Versorgungsspannung normalerweise in Sperrichtung vorgespannt. Die anderen Diagonalen der Brückenschaltungen (d. h. im Fall der genannten Brückenschaltung der Schnittstellenschaltung SLIC 1 die Verbindungspunkte der Dioden D3 und D4 bzw. D1 und D2) sind an jeweils eine Ader der betreffenden Teilnehmeranschlußleitung angeschlossen.

Die Speisespannung wird den Versorgungsleitungen VI1 und VI2 über gruppenindividuelle Absperrelemente zugeführt, bei denen es sich hier um die Reihenschaltung einer Diode Da1 bzw. Da2, die normalerweise in Durchlaßrichtung betrieben ist und im Falle des Auftretens von Überspannungen in den Sperrzustand gesteuert wird, sowie um ein induktivitätsbehaftetes Schaltelement L1 bzw. L2 handelt.

Die Schaltungsanordnung enthält ferner ebenfalls gruppenindividuelle Ableitelemente, die die Endpunkte der Brückendiagonalen, die an den Versorgungsleitungen VI1, VI2 liegen, mit einem Bezugspotential führenden Schaltungspunkt, vorzugsweise Gestellmasse, verbinden. Diese Ableitelemente bestehen im dargestellten Fall jeweils aus der Parallelschaltung eines Kondensators C und eines Varistors V, also eines spannungsstabilisierenden Widerstandes.

Wenn beispielsweise durch Blitzbeeinflussung auf einer der Teilnehmeranschlußleitungen TL eine Überspannung entsteht, werden je nach Polarität dieser Spannung zwei der Dioden der betreffenden Diodenbrücke leitend, so daß die aufgrund dieser Überspannung entstehende Aufladung der Teilnehmeranschlußleitung über die Ableitelemente C/V nach Erde abfließen kann. Aufgrund der Schaltcharakteristik der Ableitelemente ist einerseits ein niederohmiger Weg für den Ableitstrom vorhanden, andererseits ist aber sichergestellt, daß an diesen Brückendiagonalen die Spannung nur relativ wenig ansteigt, wegen der geringen Zeitdauer der Beeinflussung also den der Beeinflussung entsprechenden Maximalwert nicht erreichen kann. Hierfür ist einerseits der Kondensator C verantwortlich, andererseits aber auch die stabilisierende Wirkung des Varistors. Das Gleichspannungspotential an diesen Schaltungspunkten ändert sich daher nur derart geringfügig, daß es bei den übrigen nicht direkt von der Überspannung betroffenen Schnittstellenschaltungen, die ja ebenfalls an diesen Schaltungspunkten liegen, nicht zu einer unerwünschten Beeinflussung mit der Folge eines fehlerhaften Ansprechens kommen kann.

Als Ableitelement würde grundsätzlich auch ein entsprechend dimensionierter Kondensator alleine genügen, der dann jedoch unter Umständen eine große Kapazität aufzuweisen hätte. Bei der dargestellten Parallelschaltung von Kondensator und Varistor genügt ein Kondensator geringerer Kapazität. Statt eines Varistors kann auch eine Zenerdiode bzw. eine Halbleiterschaltung mit entsprechender Strom-Spannungscharakteristik verwendet werden, unter Umständen genügt der Einsatz einer Zenerdiode oder eines Varistors oder einer solchen Halbleiterschaltung ohne zusätzlichen Kondensator.

Die Dioden Da der Absperrelemente gehen bei einer derartigen Überspannungsbeeinflussung in den gesperrten Zustand über, so daß Auswirkungen auf weitere Gruppen von Schnittstellenschaltungen bzw. anderen mit der Speise-stromquelle in Verbindung stehenden Bestand-teilen der Vermittlungsstelle ausgeschlossen sind.

**Patentansprüche**

1. Schaltungsanordnung für den Überspannungsschutz von unter Verwendung von Halbleiterbauelementen aufgebauten, gruppenweise an eine Versorgungsspannungs-quelle angeschlossenen Schnittstellen-schaltungen (SLIC 1 bis SLIC 3) für den Anschluß von zweidrähtigen analogen Teilnehmer-anschlußleitungen (TL) an Fernsprechvermittlungs-stellen, die je Schnittstellenschaltung eine Diodenbrücke aus durch die Versorgungsspannung normalerweise in Sperrichtung vorgespannten Dioden (D1 bis D4) enthält, die mit ihrer einen Diagonalen an die beiden Adern der betreffenden Teilnehmeranschlußleitung (TL) angeschlossen ist, und an deren anderer Diagonalen über wenigstens ein im Falle des Auftretens einer Überspannung in den Sperrzustand übergehendes, mehreren Schnittstellenschaltungen gemeinsames Absperrelement (Da, L) die Versorgungsspannung liegt, und die ebenfalls für eine Gruppe von Schnittstellenschaltungen gemeinsame Ableitschaltelemente (C, V) aufweist, über die im Falle des Auftretens einer Überspannung die Ableitströme von den letztgenannten Brückendiagonalen auf einen Bezugspotential führenden Schaltungspunkt geleitet werden, dadurch gekennzeichnet, daß Ableitschaltelemente (C, V) verwendet werden, die die bei Auftreten von Überspannungen an der mit ihnen verbundenen Brückendiagonalen entstehenden Spannungshübe abflachen und/oder begrenzen.

2. Schaltungsanordnung nach Anspruch 1, dadurch gekennzeichnet, daß die Ableitschaltelemente Kondensatoren (C) sind.

3. Schaltungsanordnung nach Anspruch 1, dadurch gekennzeichnet, daß die Ableitschaltelemente Zenerdioden sind.

4. Schaltungsanordnung nach Anspruch 1, dadurch gekennzeichnet, daß die Ableitschaltelemente Varistoren sind.

5. Schaltungsanordnung nach Anspruch 1, dadurch gekennzeichnet, daß die Ableitschaltelemente jeweils in Form einer spannungsstabilisierenden Halbleiterschaltung gebildet werden,

6. Schaltungsanordnung nach Anspruch 2, dadurch gekennzeichnet, daß den Kondensatoren (C) jeweils eine Zenerdiode oder ein Varistor (V) parallelgeschaltet sind.

7. Schaltungsanordnung nach Anspruch 2, dadurch gekennzeichnet, daß den Kondensatoren jeweils eine spannungsstabilisierte Halbleiterschaltung parallel geschaltet ist.

## Claims

1. A circuit arrangement for surge voltage protection of interface circuits (SLIC 1 to SLIC 3) constructed of semiconductor components and connected in groups to a supply voltage source to connect two-wire, analogue subscriber connection lines (TL) to telephone exchanges, where the circuit arrangement contains, in respect of each interface circuit, a diode bridge whose diodes (D1 to D4) are normally biased in the blocking direction by the supply voltage and which has one diagonal connected to the two wires of the subscriber connection line (TL) in question and its other diagonal connected to the supply voltage via at least one blocking element (Da, L) which assumes the blocked state when a surge voltage occurs and is common to a plurality of interface circuits, and where the circuit arrangement likewise contains by-pass circuit elements (C, V) common to a group of interface circuits via which leakage currents are diverted from the last-mentioned bridge diagonal to a circuit point which carries reference potential on the occurrence of a surge voltage, characterised in that by-pass circuit elements (C, V) are used which flatten and/or limit voltage swings occurring on the occurrence of surge voltages across the bridge diagonal to which they are connected.

2. A circuit arrangement as claimed in Claim 1, characterised in that the by-pass circuit elements are capacitors (C).

3. A circuit arrangement as claimed in Claim 1, characterised in that the by-pass circuit elements are Zener diodes.

4. A circuit arrangement as claimed in Claim 1, characterised in that the by-pass circuit elements are varisters.

5. A circuit arrangement as claimed in Claim 1, characterised in that the by-pass circuit elements each consist of a voltage stabilising semiconductor circuit.

6. A circuit arrangement as claimed in Claim 2, characterised in that a Zener diode or a varistor (V) is connected in parallel to each of the capacitors (C).

7. A circuit arrangement as claimed in Claim 2, characterised in that a voltage stabilised semiconductor circuit is connected in parallel to each of the capacitors.

## Revendications

1. Montage pour protéger contre les surtensions des circuits d'interface (SLIC 1 à SLIC 3), qui sont constitués moyennant l'utilisation de composants à semiconducteurs, sont raccordés par groupes à une source de tension d'alimentation et sont prévus pour le raccordement de deux lignes analogiques bifilaires d'abonnés (TL) à des centraux téléphoniques qui contiennent, pour chaque circuit d'interface, un pont de diodes qui est constitué par des diodes (D1 à D4) polarisées normalement en inverse par la tension d'alimentation et qui est raccordé par l'une de ses diagonales aux deux conducteurs de la ligne d'abonné (TL) considérée et à l'autre diagonale duquel la tension de polarisation est appliquée par l'intermédiaire d'au moins un organe de blocage (Da, L) qui passe à l'état bloqué dans le cas de l'apparition d'une surtension et est commun à plusieurs circuits d'interface, et qui comporte également pour un groupe de circuits d'interface, des circuits de dérivation (C, V) au moyen desquels, dans le cas de l'apparition d'une surtension, les courants de dérivation sont envoyés par la diagonale du pont indiquée en dernier à un point du circuit placé à un potentiel de référence, caractérisé par le fait que l'on utilise des éléments de dérivation (C, V) qui nivèlent et/ou limitent des excursions de tension qui apparaissent dans les diagonales du pont reliées à ces éléments, lors de l'apparition de surtensions.

2. Montage suivant la revendication 1, caractérisé par le fait que les éléments de dérivation sont des condensateurs (C).

3. Montage suivant la revendication 1, caractérisé par le fait que les éléments de dérivation sont des diodes Zener.

4. Montage suivant la revendication 1, caractérisé par le fait que les éléments de dérivation sont des varistances.

5. Montage suivant la revendication 1, caractérisé par le fait que les éléments de dérivation sont constitués respectivement sous la forme d'un circuit à semiconducteurs stabilisé en tension.

6. Montage suivant la revendication 2, caractérisé par le fait que respectivement une diode Zener ou une varistance (V) est branchée en parallèle avec les condensateurs (C).

7. Montage suivant la revendication 2, caractérisé par le fait que respectivement un circuit à semiconducteurs stabilisé en tension est branché en parallèle avec les condensateurs.